# EUROPEAN PATENT APPLICATION

(11) **EP 1 274 023 A1**
(43) Date of publication of application: **08.01.2003**
(21) Application number: 01116316.9
(22) Date of filing: 05.07.2001
(51) Int. Cl.: G06F 17/60

(54) **Method, computer programme, and device of handling data to be used for returning items**

(71) Applicant: CANON EUROPA N.V., NL-1185 XB Amstelveen (NL)
(72) Inventor: De Mol Van Otterloo, Maarten, Joost, 1185XB Amstelveen (NL); Asaoka, Nobuyoshi, 1185XB Amstelveen (NL); Otsuka, Sinichiro, 1185XB Amstelveen (NL); Nagasawa, Kenichi, 1185XB Amstelveen (NL)
(74) Representative: Leson, Thomas Johannes Alois, Dipl.-Ing.

(57) **Abstract**

This invention introduces, as one aspect, a method for handling data to be used for returning items; comprising steps of creating label data representing a label to be printed and to be used for returning items from a customer, adding additional information on the label data to be used for restricting usage of the label, and sending the label data to a customer. Accordingly usage of the label copied, modified, or faked would significantly minimised with a little additional cost.

## Description

### FIELD OF THE INVENTION

This invention relates to a method, a set of computer programmes and a device of handling data to be used for returning items. Especially, this invention relates, but not limited, to returning recyclable items containing consumables, such as toner cartridges, ink bottles and so on.

### BACKGROUND OF THE INVENTION

Recently, collecting recyclable items such as toner cartridges, inkbottles from customers become much more important. For instance, after using toner itself, empty cartridges obviously become disposals. However, some of parts can be reused and some manufacturers have already prepared a plant or a recycle centre to fabricate new toner cartridges filled by toner.

Then, the manufacturer can use such empty cartridge efficiently and can save costs. Also these activities also cause good for the environment and advertisements for these activities make customers conscious of importance on recycling.

One of ordinal method to collect such items is to enclose a pre-authorised label in a container of a new cartridge. Customers can use the label to return their consumed cartridges by using the label, namely the customers can bring empty cartridges to the carrier, for example a post office, a transport firm and so on, to send them to the predetermined plants or other destinations by free. Therefore, the label itself must be pre-authorised by the carrier and the manufacturer. The label has to have information of the name of the carrier, destination to be transported, and identification or certification representing pre-authorisation.

This kind of method has actually worked well and encouraged customers to return their empty cartridges. However, this method includes some drawbacks as follows.

The manufacturer has to make sure about customers' locations and suitable carrier service at the timing of shipping new cartridges and enclose suitable labels for each cartridge. This obviously causes significant workload and relating costs. Accordingly, this kind of method is difficult to be used for collecting small and cheap cartridges or small inkbottles.

Secondly, this may cause customer's workload when the customer moves their location. What have to be done is either the manufacturer send a new label upon request of the customer or the customer brings their consumed cartridges to the carrier located close to the previous location of the customer. This also causes significant workload on both manufacturers and customers and can discourage returning items.

Thirdly, the label can be modified, copied or faked. Therefore, these kind of conducts may cause significant damage both manufacturers or carriers. Of course, detecting such modification, copying, or like can be possible by utilising certain methods. However, this means all of the carriers have to have instruments to realise such methods and certain amount of database storing customers information. This also cause significant cost for collecting recyclable items.

Recently some ideas are raised by utilising the network and Web Sites. For example 4172029 shows the way to utilising Internet for collecting empty cartridges. The use of the Internet and Web Site resolve some of the drawbacks set out above.

In short, if the manufacturer can send a label to each customer via Web-Site, it is obvious to resolve the problem about workload for enclosing labels and confirming customer's location is solved. This method also resolves the problem caused by the relocation of customer, since the customer can request a label via Web Site with informing the new location.

However, this method cannot solve the problem caused by the possibility of modifying, copying, and faking labels, rather this method enlarge this kind of problem. Because, the customer easily print a label several times. Since the printed label printed by printers owned by customers has normally lower quality and lower resolution than that printed by the printing company, it becomes easier to manipulate, modify, or fake the label.

### SUMMARY OF THE INVENTION

This invention had been done for resolving drawbacks describing above.

The object of this invention is to prevent a system for returning items from suffering by copy, modify, or fake the labels to be used for returning items.

Another object of this invention is to minimise the cost to encourage customers to return their consumed items without significant additional workloads of the manufacturer and customer.

To accomplish the above objects, this invention introduces, as one aspect, a method for handling data to be used for returning items; comprising steps of creating label data representing a label to be printed and to be used for returning items from a customer, adding additional information on the label data to be used for restricting usage of the label, and sending the label data to a customer.

According to this method, usage of the label copied, modified, or faked would significantly minimised with a little additional cost.

As another aspect of this invention, this invention introduces a set of computer programmes to be used for returning items; comprising programme for creating label data representing a label to be printed and to be used for returning items from a customer, programme for adding additional information on the label data to be used for restricting usage of the label, and programme for sending the label data to a customer.

As further aspect of this invention, this invention introduces a device for handling data to be used for returning items, the device being connected to a network to which a device of a customer is connected, the device comprising, creating means for creating label data representing a label to be printed by the customer and to be used for returning items from a customer, adding means for adding additional information on the label data to be used for restricting usage of the label, and sending the label data to a customer.

These aspects minimise further workload of the manufacturer side and also the customer side. These aspects may be realised by, for example, adding unique additional information for each label by bar codes or watermarking.

These aspects may also be realised by, for example, using the additional information for checking lapse of time, for example, from time at which sending the label data to the customer, using the additional information for checking whether the label has been used or not, or using the additional information for checking whether combination of the additional information and item information to be return is proper or not.

These aspects may also be realised by, for example, receiving information representing a printed label to be used by the customer and checking whether the received information is proper or not. Such information representing label may be image data and the image data is decoded to reproduce the additional data during checking, a unique data by decoding either bar codes or watermarks, or the additional data which has been decoded from the printed label.

These aspects may also be accomplished by sending a message to warn the customer so that the label data is improper in response to the result of the checking step.

Further object of this invention is to minimise the cost to encourage customers to return their consumed items without significant additional workloads or costs beard by the carrier.

To accomplish the above objects, this invention introduces, as one aspect, a device for handling data to be used for returning items, the device being connected to a network to which a device of manufacturer is connected, the device of manufacturer sending label data presenting a label to be printed and to be used for returning items from a customer with unique information for each label to the network, the device comprising means for scanning a printed label to obtain image data corresponding thereto, means for sending the image data to the device of manufacturer so that the image data is to be checked; and means for receiving the result of checking whether the unique information contained in the image data of the printed label is proper or not from the device of manufacturer.

To accomplish the above objects, this invention introduces, as one aspect, a device for handling data to be used for returning items, the device being connected to a network to which a device of manufacturer is connected, the device of manufacturer sending label data presenting a label to be printed and to be used for returning items from a customer with unique information for each label to the network, the device comprising means for reading a printed label to obtain the unique information corresponding thereto, means for sending the unique information to the device of manufacturer so that the unique information is to be checked, and means for receiving the result of checking whether the unique information of the printed label is proper or not from the device of manufacturer.

These aspects minimise further costs or workload of the carrier side and also the customer side.

Other features or aspects would be clarified by following detailed embodiments with reference to the drawings.

### BRIEF DESCRIPTION OF THE DRAWINGS

Figure 1 shows a block diagram showing elements of an example of a whole network system in which this invention is implemented.
Figure 2 shows a time chart of processes carried out for sending a label to the customer in the system shown in Figure 1.
Figure 3 shows a flow chart representing programmes executed by the server of the manufacturer shown in Figure 1 to realise the processes shown in Figure 2.
Figure 4 shows a displayed page for customers, by the programmes corresponding to Figure 3, to be used for inputting whether the customer has been already registered or not.
Figure 5 shows a displayed page for customers, by the programmes corresponding to Figure 3, to be used for inputting customer's information.
Figure 6 shows a displayed page for customers, by the programmes corresponding to Figure 3, to confirm the registration.
Figure 7 shows a displayed page for customers, by the programmes corresponding to Figure 3, to be used for inputting registered information of the customer.
Figure 8, shows a label printed in accordance with the programmes corresponding to Figure 3.
Figure 9 shows a time chart of processes carried out for checking a label to be used in the system shown in Figure 1.
Figure 10 shows a flow chart representing programmes executed by the server of the manufacturer shown in Figure 1 to realise the processes shown in Figure 9.

### DETAILED DESCRIPTION OF PREFERRED EMBODIMENTS

To make it easy to implement this invention, only some of embodiments or aspects of this invention is described as below.

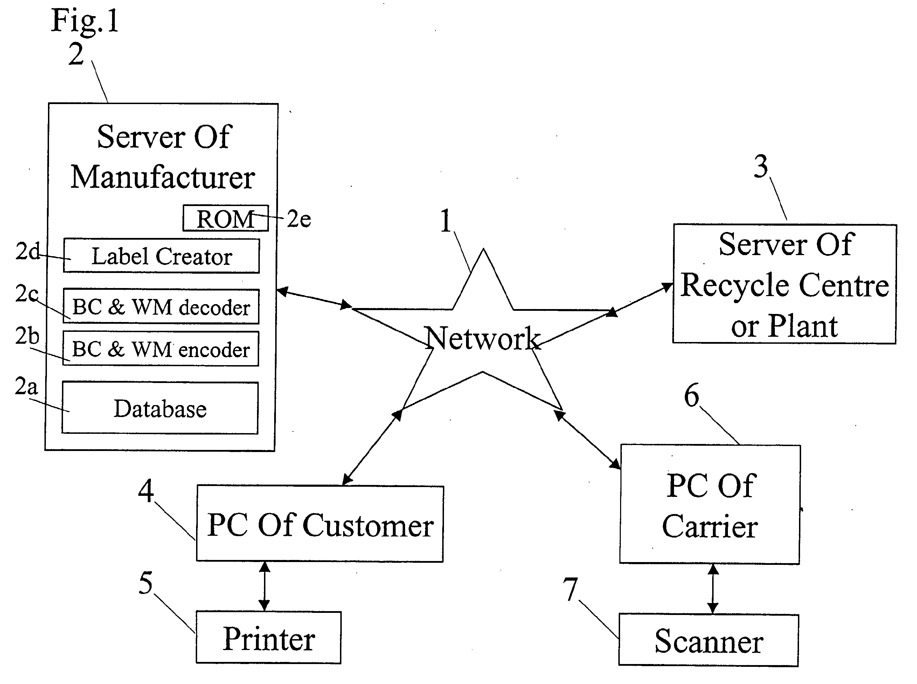

Figure 1 shows a network system connected to a plurality of computers located in some instruments. In this specification, word "computer" will sometimes to be used as a central processing unit (CPU) itself or one including surrounding hardware and software. According to this embodiments, a network 1 shall connect at least a computer located in a server of manufacturer (hereinafter "Manufacturer Server") 2, a computer located in a personal computer of the customer (hereinafter "Customer PC") 4, a computer located in a server of the recycle centre or plant (hereinafter "Plant Server") 3, and a computer located in a personal computer of the carrier (hereinafter "Carrier PC") 6.

Besides, although only one Carrier PC 6 and one Plant Sever 3 are shown in the Figure 1, there are a plurality of Carrier PCs and Plant Servers connected to the network 1.

The personal computer used in this specification means a set of instruments including a display, an input device, such as a keyboard and a mouse, a CPU, a disc drive and others inherently included in the personal computer. Customer PC 4 is connected to a printer 5 and Carrier PC 6 is connected to a scanner 7.

The server used in this specification means a set of devices including a computer and other electric instruments prepared so as to create a Web Site producing one or more Web Page composed of texts, pictures, photographs, and/or objects to be displayed. The Manufacturer Server 2 includes a database 2a in which information of the customer is stored, an encoder 2b for encoding information to create barcodes (BC) and watermarks (WM), a decoder 2c for decoding BC and WM for restoring the original information, and a label creator 2d for creating image data of the label to be sent including the information encoded by the encoder 2b.

Programmes, which control processes executed by the Manufacturer Server, are stored in a ROM 2e, located in the Manufacturer Server 2, and are read in accordance with proceeding processes. Similarly, programmes controlling processes executed by the Customer PC 4, the Carrier PC 6, and the Plant Server 3 are stored therein, although memories are not shown in the Customer PC 4, the Carrier PC 6, and the Plant Server 3 of the Figure 1.

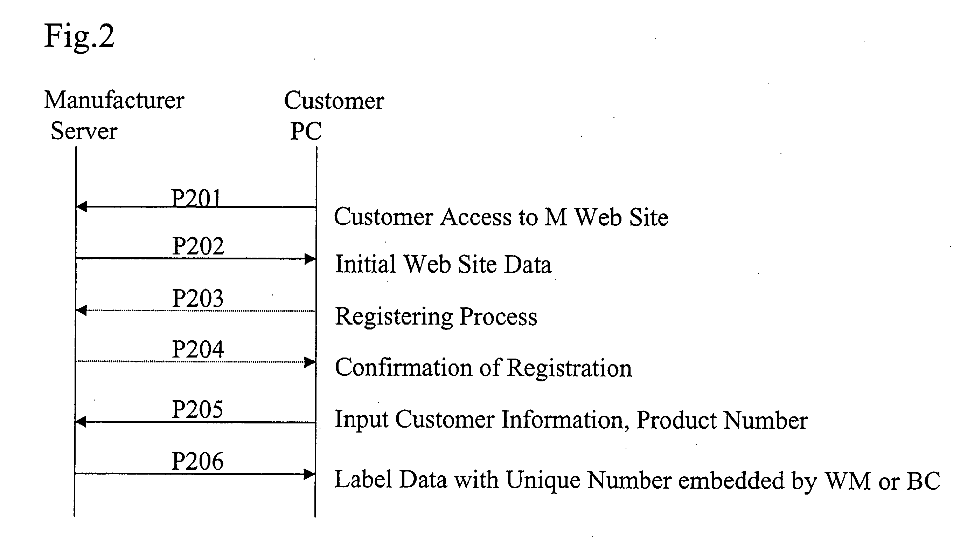

Firstly, for making understanding easy, rough processes are described by referring Figure 2. Figure 2 represents order of processes, which have to be carried out for sending a label to the Customer PC 4 in the system shown in Figure 1. A process P201 represents an access made by the customer (Customer PC 4) and a process P202 represent sending an initial Web Page to the Customer PC 4.

If the customer has already been properly registered, the customer can input its information at a process P205. However, if the customer has not been registered, registering processes P203 and P204 are taken. The process P203 represents sending information necessary to register the customer and the process P204 represents sending the information for confirming the registration.

The process P205 represents sending information about customer including Product Number, including such as a name of the product and a serial number. The information sent at the process P205 is described later. If the information sent in the process P205 is appropriate, the Manufacturer Server send the Label Data representing a label to be used for returning items. In this embodiment, such Label Information is sent with additional information embedded by using barcodes or watermarks.

Obviously, there exist many correspondences between the Manufacturer Sever 2 and Customer PC 4. However, in the Figure 2, such correspondences are often now shown, but described below.

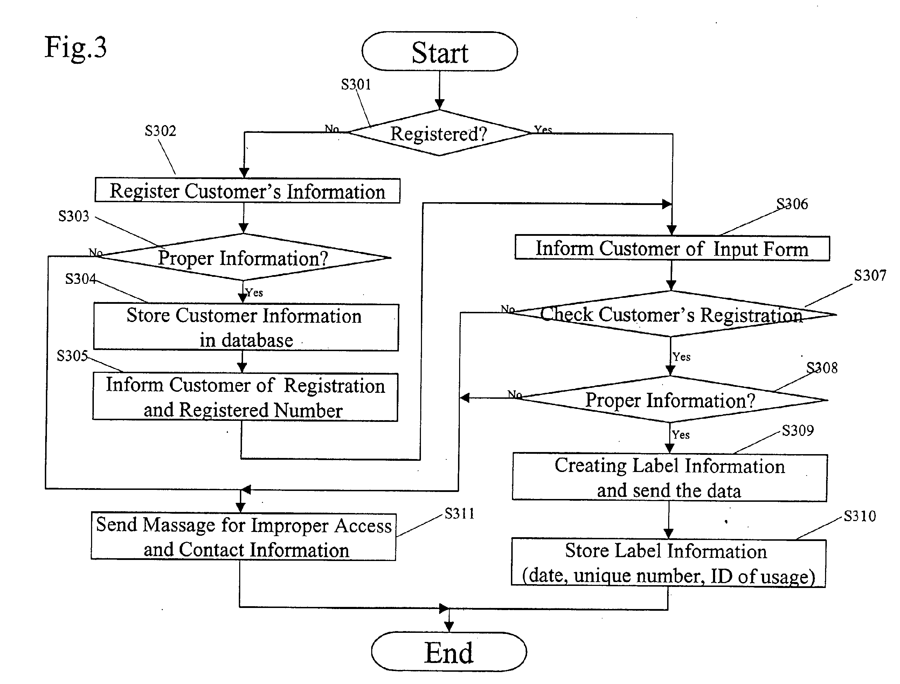

To make these processes carried out in this embodiment detailed, concrete processes carried out in this embodiment are now described by using Figures 3 through 8.

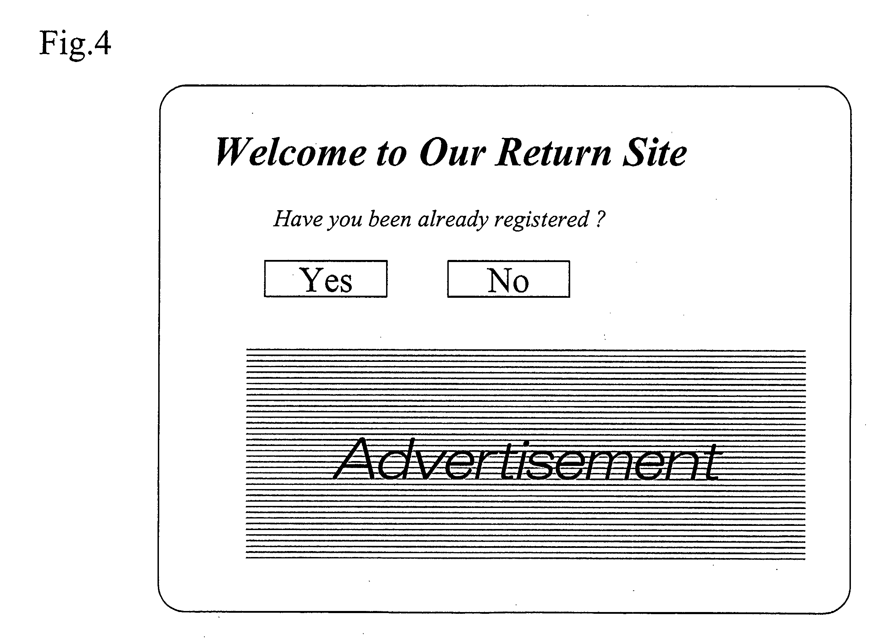

First, when the customer access the Web Site created by the Manufacturer Server 2 via Customer PC 4, data representing the Web Page shown in figure 4 is sent to the Customer PC 4 from the Manufacturer Server 2. Obviously the Manufacturer Server has a function to make up such a Web Page by using well-known method, namely VRML, HTML, XML or other known languages.

As shown in the Figure 4, such a Web Page may include some text and pictures for the purpose of advertisement. According to this embodiment, this page shows operable rectangular areas with "Yes" and "No'" to be clicked by the customer by using input devices with seeing the displayed page. Since, the text "Have you been already registered?" is shown via a display included in the Customer PC 4, "Yes" means that the customer declares his or her registration. In the step S301 of the Figure 3, the Manufacturer Server receives the result of such customer's declaration.

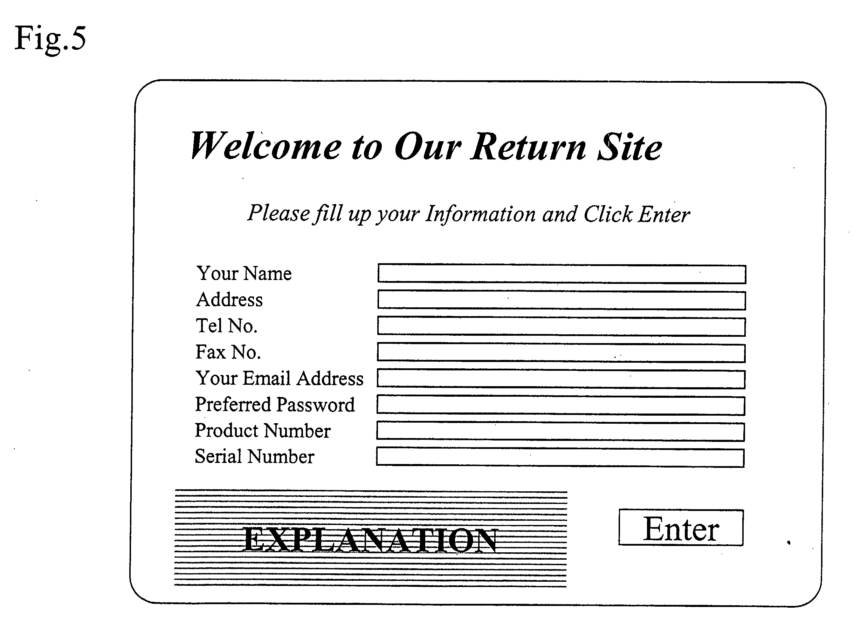

If the customer click "No" in a step S301, process goes to a step S302 for registering the customer's information. In the step S302 Manufacturer Server 2 automatically prepare the next Web Page as shown in the Figure 5. As shown in the Figure 5, this Web Page is prepared to make customer input his or her information, including a name, an address, a telephone number, a facsimile number, an email address, a password, a product number, and serial number of the product. Besides, according to the Figure 5, explanation how to fill up such information is described below input columns for these information.

When the customer clicks "Enter" after filling up these information, all of the information shown in Figure 5 is sent to the Manufacturer Server 2 in the step S302. Then the Manufacturer Server 2 checks whether some of the information is proper or not in a step S303. The Manufacturer Server 2 refer the database for checking whether input product name actually exists and input serial number comply with a rule of numbering by checking a number of digits or its order, for example.

If the check executed in the step S303 indicates that information is proper, the process goes to a step S304. If not, process goes to a step S311. In the step S311, the Manufacturer Server 2 send another Web-Page to the Customer PC 4 which includes message that this access is made with improper information. The Web Page sent in the step S311 also includes the message informing of contact information by which the customer knows how to solve this problem. Then process is finished.

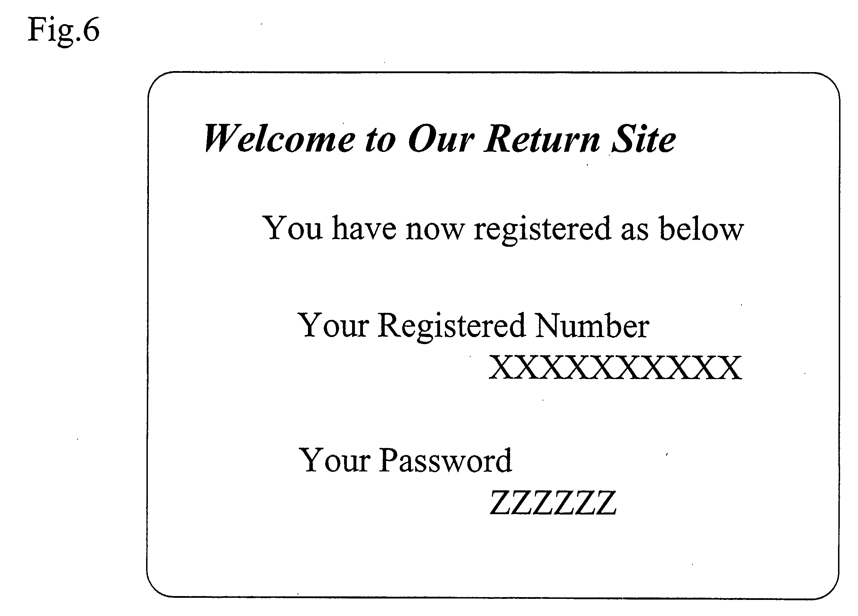

On the other hand, if information is proper, the Manufacturer Server 2 stores the information sent from the customer into the database 2a and go to a step S305. In the step S305, the Manufacturer Server 2 send another Web Page as shown in figure 6 informing that the registration has been done with a registered number of the customer and a corresponding password thereto, and go to a step S306 automatically.

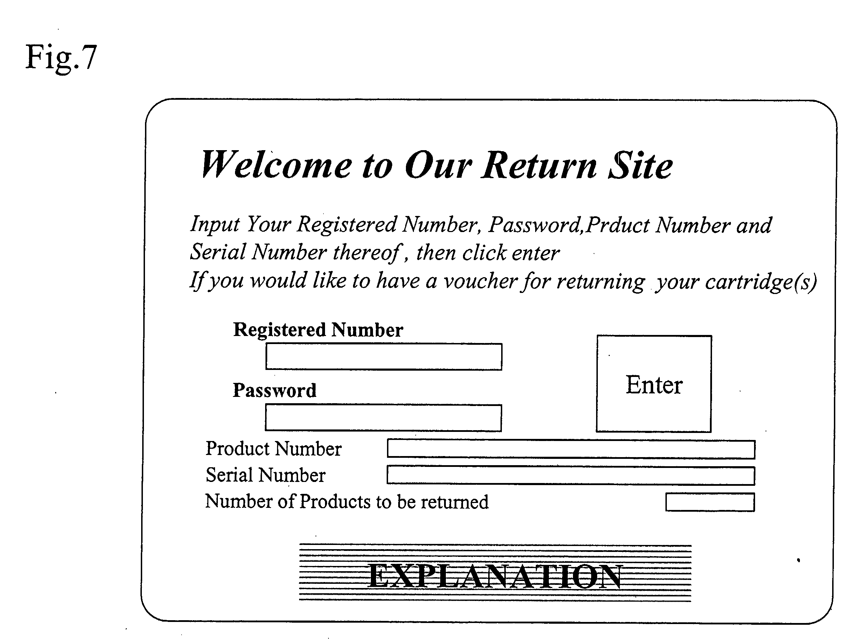

If the customer clicks "Yes" in the step S301, the process goes to the step S306 as well. In the step S306, the Manufacturer Server send another Web Page as shown in Figure 7 asking the customer fill up the registered numbers, the password, the product number, the serial number thereof and a number of products to be returned. As shown in Figure 7, explanation how to fill up such information is similarly described to Figure 5.

In this step S306, it is possible to ask the customer just registered by the steps 303-305 only information excluding the product number and serial number thereof, since it is supposed that these are not changed.

After the customer fills up the information shown in Figure 7 and clicks "Enter", the Manufacturer Server check whether input register number and password have been registered or not by referring the database 2a thereof in a step S307 and whether input serial number and product number are proper or not as same as the step S303.

If input product number and serial number are proper as described as the step S303 and the customer has already registered with the registered number and a proper password, the process goes to a step S309. Otherwise, the process goes to the step S311 and the process is finished after sending the Web Page including messages as mentioned above.

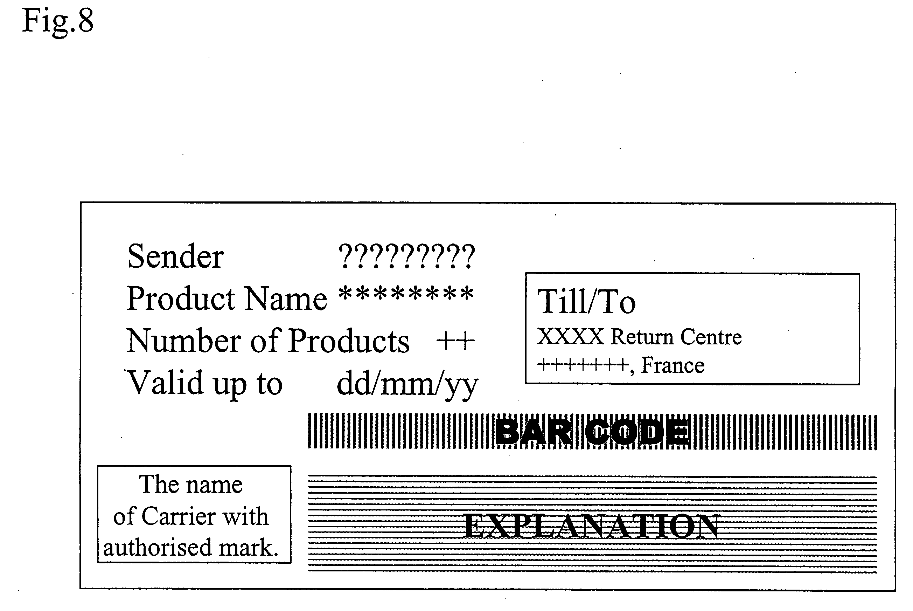

On the other hand, in the step S309, a pre-authorised label to be used for returning cartridges shown in Figure 8 is created in the Manufacturer Server 2. In this step S309, the Manufacturer Server 2 firstly creates some kind of unique information about the label including a unique number for each label, date indicating when the label is sent (sending date), and a product number. These information, namely the unique number, the date and the product number, are supplied to the encoder 2b.

Information including the registered number, a name of the customer as a sender, the product name, number of the products, and the sending date are also supplied to the label creator 2d. The label creator 2d creates image data as shown in the Figure 8 by using such information. As for a date for expiration, namely the date shown next to the text of "Valid up to" is calculated by using the sending date. For example, the expiration date is set as a date 2 month after the sending date.

As for the name of the Carrier and the destination shown under the text of Till/To are created in the label creator 2d by referring database 2a to select a suitable Carrier and a suitable destination, namely a plant or recycle centre, based on address information of the customer obtained from the registered number.

As for the barcodes, the label creator 2d receives the encoded barcodes from the BC & WM encoder 2b and simply add the encoded barcodes including the information described above, namely the unique number, the expiration date and the product number, on the label as shown in the Figure 8. After adding the encoded barcodes, image shown in the Figure 8 is once sent to the BC & WM encoder 2b and is encoded to add watermarks for embedding the information described above latently. Finally, the BC & WM encoder 2b send the watermarked image to the label creator 2d again and the encoded label data is sent to the Customer PC 4 from the Manufacturer Server 2 in the step S309.

Immediately after sending the label data, the Manufacturer Server 2 stores the Label Information as a combination of the unique number, the expiration date and the product number in the step S310 and ends the process.

As described above, the label data sent from the Manufacturer Server includes information to be used for restricting usage of each label. Accordingly improper usage of the label is effectively prohibited as described later.

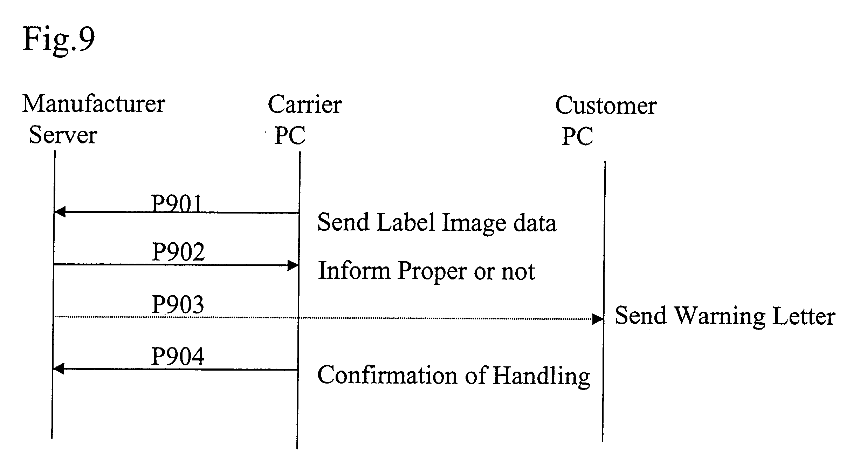

After sending the label data, the customer instructs the Customer PC 4 to send the label data to a printer 5 for printing the label corresponding to the label data. The customer takes the printed label to the carrier. Then, the customer ask the carrier to transport the items to the designated destination displayed on the printed label. Figure 9 shows rough processes taken at the Carrier PC for making understanding easy.

The carrier receiving the printed label from customer firstly scans the printed label by using the scanner 7 as image data. The carrier make the Carrier PC to send the imaged data of the label scanned by the scanner 7 to the Manufacturer Server 2 via the network 1 in a process P901 shown in the Figure 9. The manufacturer Server 2 check whether the label is proper to be used or not by using the image data of the label received.

As mentioned above, the image data of the label included information encoded as the bar codes and encoded by watermarking. The Manufacturer Server 2 sends the image data received by the Carrier PC 6 to the BC & WM decoder to decode the information including the unique number, the expiration date and the product number. Then the Manufacturer Server 2 checks whether the label to be used is proper or not and sends checked result to the Carrier PC 6 in a process P902 shown in the Figure 9.

If the Manufacturer Server 2 judges that the label to be used is improper one, the Manufacturer Server 2 send a warning letter to the Customer PC 4 by using email system via the network 1 in a process P903. On the other hand, the Manufacturer Server 2 judges that the label to be used is proper one, the Carrier PC 6 informs the Manufacturer Server 2 to confirm that the carrier handle the consumed items to transport to the destination shown in the label in a step P904.

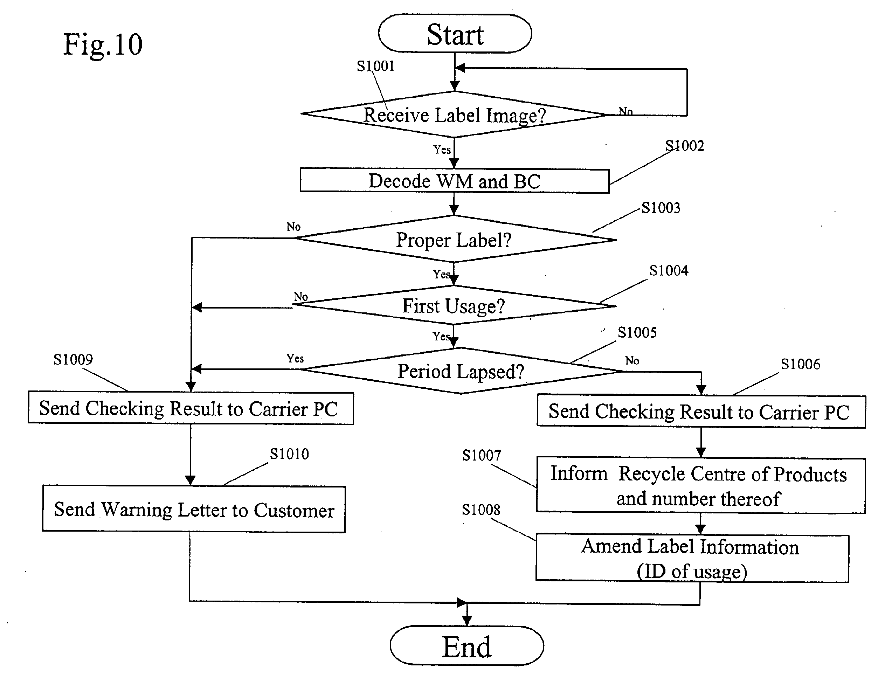

To make these processes carried out in this embodiment detailed, concrete processes carried out in this embodiment are now described by using Figures 10. A flow chart shown in the figure 10 represents programmes executed in the Manufacturer Server 2.

As shown in the Figure 10, when the Manufacturer Server 2 receives the image data of the label from the Carrier PC 6, the process is shifted from a step S1001 to a step S1002. In the step S1002, the Manufacturer Server 2 sends the image data of the label to the BC & WM decoder 2c. The BC & WM decoder 2c decodes the barcodes contained in the image data and decodes the watermarks embedded in the image data. The decoder 2c outputs the information including the unique number, the expiration date and the product number.

In accordance with the decoded information, the Manufacturer Server 2 judges whether the label to be used is proper or not in steps S1003, S1004 and S1005. In the step S1003, the Manufacturer Server 2 compares the decoded information obtained from barcodes with the decoded information obtained from the watermarks. If the decoded information is different from each other, the Manufacturer judges that the label to be used is improper, since there are a possibility of modification of the label, especially that the barcodes are modified. Also in the step S1003, the Manufacturer Server 2 checks whether the combination of the product number and the unique number is stored in the database 2a. If the combination obtained from the decoded information is not stored, the Manufacturer judges that the label to be used is improper, since there are a possibility of modification of the label. If the Manufacturer Server 2 judges that the label is improper in the step S1003, the process goes to a step S1009.

On the other hand, if the Manufacturer Server 2 judges that the label is proper in the step S1003, the process goes to a step S1004. In the step S1004, the Manufacturer Server 2 checks by referring the database whether the label having the unique number has been used or not. If it has been used, the Manufacturer Server judges that the label is improper, since it is possible that the label to be used has been copied or modified. If it is judged in the step S1004 that the label is improper, the process goes to the step S1009. If not, the process goes to the step S1005.

The customer and the carrier can see the expiration date shown in the label to be used. Therefore only the fact that the label data sent from the Manufacturer Server 2 to the Customer PC 4 includes such visible data about the expiration date is effective to prevent from improper usage of the label. For example, even if somebody steels or accidentally finds lost labels, these lost labels cannot be used. Further this embodiment cares about this kind of usage, even if the carrier overlooks the expiration of the label or displayed expiration date has been modified.

In the step S1005, the Manufacturer Server 2 checks the expiration date obtained from the image data of the label and judge whether the label is still usable or not. This prevents from improper usage of the label modified or edited. If the expiration date obtained from the image data of the label is gone, the process goes to the step S1009.

In the step S1009, the Manufacturer Server 2 sends the checking result that the label is improper to the Carrier PC 6. Then, the carrier can reject using the improper label. Following the step S1009, the Manufacturer Server 2 also send the warning letter to the customer corresponding to the unique number to inform that the label send to the customer may modified, copied or faked in a step S1010. After the process of the step S1010 is executed, the Manufacturer Server 2 ends the process.

On the other hand, if the label to be used is proper in steps S1003, S1004 and S1005, the process goes to a step S1006. In the step S1006, the Manufacturer Server 2 sends the checking result that the label is proper to the Carrier PC 6. Then, the carrier can accept using the label. Accordingly usage of the label is authorised and the usage will carried out. Therefore, the Manufacturer Server 2 informs the Plant PC 3 of the fact that the product (empty cartridge) will reach the plant or recycle centre in a step S1007. This helps the recycle centre or the plant to control their recycling work.

Following the step S1007, the Manufacturer Server rewrite the database so as to store the fact that the label corresponding to the unique number has been used. This information is used in the step S1004 later. After the step S1007, the process ends.

According to the embodiment described above, any improper usage of the label would be prohibited. Concretely, using modified labels, fake labels, lost labels or copied labels become impossible. Accordingly, the embodiments described above resolves the drawback caused by the possibility of modifying, copying, and faking labels, even if the label is sent to the customer as the label data via the network.

In the embodiment described above, the BC & WM decoder 2c is located in the Manufacturer Server 2. However, there is another option that the BC & WM decoder 2c is located in the Carrier PC 6 by sending a decoding programme from the Manufacturer Server 2 to the Carrier PC 6 or by installing such a program. In this option, installing or sending programme to each of the Carrier PCs would be necessary and this cause some workloads. However, in term of corresponding time, this option has advantage. Because, if the Carrier PC can decode BC and WM, only the decoded information is transferred from the Carrier PC 6 to the Manufacturer Server 2. Therefore, the corresponding time is reduced.

The above-described embodiments restrict the usage of the printed label by checking all of whether the label is expired, whether the label has been used. However, only a method, programme and device in which one kind of checking is carried out for restricting the usage are within the scope of this invention.

Although limited embodiments are only described in the specification, it is possible to change the embodiments to the extent of the scope of claims.

As described above, this invention creates or introduces method, programme or device which gives advantages as follows.

The manufacturer does not have to make sure about customers' locations and suitable carrier service at the timing of shipping new cartridges and to enclose suitable labels for each cartridge. This reduces workload and relating costs.

It become unnecessary for the manufacturer to send a new label upon request of the customer to its new location or for the customer to bring their consumed cartridges to the carrier located close to the previous location of the customer. This also reduces significant workload on both manufacturers and customers and can encourage returning items.

The damage on both manufacturers and carriers caused by the modified, copied or fake label can be avoided without significant increase of costs and workloads.

This invention introduces, as one aspect, a method for handling data to be used for returning items; comprising steps of creating label data representing a label to be printed and to be used for returning items from a customer, adding additional information on the label data to be used for restricting usage of the label, and sending the label data to a customer. Accordingly usage of the label copied, modified, or faked would significantly minimised with a little additional cost.

## Claims

1. A method for handling data to be used for returning items; comprising steps of
creating label data representing a label to be printed and to be used for returning items from a customer;
adding additional information on the label data to be used for restricting usage of the label; and
sending the label data to a customer.

2. A method according to claim 1, wherein the additional information is unique for each label sent to the customer.

3. A method according to claim 2, wherein the additional information is added by bar codes.

4. A method according to claim 2, wherein the additional information is added by watermarking.

5. A method according to claim 2, wherein the additional information is used for checking lapse of time.

6. A method according to claim 5, wherein time from sending the label data to the customer is measured.

7. A method according to claim 2, wherein the additional information is used for checking times of usage of the label.

8. A method according to claim 7, wherein the additional information is used for checking whether the label has been used or not.

9. A method according to claim 2, wherein the label information further includes item information identifying the item to be returned and combination of the additional information and the item information are checked whether the combination is proper or not.

10. A method according to claim 1, further comprising a step of receiving information representing a printed label to be used by the customer, and a step of checking whether the received information is proper or not.

11. A method according to claim 10, wherein image data of the printed label is received in the receiving step and the image data is decoded to reproduce the additional data in the checking step.

12. A method according to claim 11, wherein the additional data is reproduced as a unique data by decoding bar codes located on the printed label.

13. A method according to claim 11, wherein the additional data is reproduced as a unique data by decoding watermarks embedded on the printed label.

14. A method according to claim 11, wherein the additional data which has been decoded from the printed label is received in the receiving step and the additional data is used in the checking step.

15. A method according to claim 10, further comprising a step of sending a message to warn the customer so that the label data is improper in response to the result of the checking step.

16. A method according to claim 1, wherein the label represents the carrier to return the items and is authorised by the carrier.

17. A method according to claim 16, wherein the label also represents the destination to which the items are transferred by the carrier and a name of the customer.

18. A set of computer programmes to be used for returning items; comprising
programme for creating label data representing a label to be printed and to be used for returning items from a customer;
programme for adding additional information on the label data to be used for restricting usage of the label; and
programme for sending the label data to a customer.

19. A set of computer programmes according to claim 18, wherein the additional information is unique for each label sent to the customer.

20. A set of computer programmes according to claim 19, wherein the additional information is added by bar codes.

21. A set of computer programmes according to claim 19, wherein the additional information is added by watermarking.

22. A set of computer programmes according to claim 19, wherein the additional information is used for checking lapse of time.

23. A set of computer programmes according to claim 22, wherein time from sending the label data to the customer is measured.

24. A set of computer programmes according to claim 19, wherein the additional information is used for checking times of usage of the label.

25. A set of computer programmes according to claim 24, wherein the additional information is used for checking whether the label has been used or not.

26. A set of computer programmes according to claim 19, wherein the label information further includes item information identifying the item to be returned and combination of the additional information and the item information are checked whether the combination is proper or not.

27. A set of computer programmes according to claim 18, further comprising programme for receiving information representing a printed label to be used by the customer, and programme for checking whether the received information is proper or not.

28. A set of computer programmes according to claim 27, wherein image data of the printed label is received by the receiving programme and the image data is decoded to reproduce the additional data by the checking programme.

29. A set of computer programmes according to claim 28, wherein the additional data is reproduced as a unique data by decoding bar codes located on the printed label.

30. A set of computer programmes according to claim 28, wherein the additional data is reproduced as a unique data by decoding watermarks embedded on the printed label.

31. A set of computer programmes according to claim 30, wherein the additional data which has been decoded from the printed label is received by the receiving programme and the additional data is used by the checking programme.

32. A set of computer programmes according to claim 27, further comprising programme for sending a message to warn the customer so that the label data is improper in response to the result of the checking programme.

33. A device for handling data to be used for returning items, the device being connected to a network to which a device of a customer is connected, the device comprising;
creating means for creating label data representing a label to be printed by the customer and to be used for returning items from a customer;
adding means for adding additional information on the label data to be used for restricting usage of the label; and
sending means for sending the label data to a customer.

34. A device according to claim 33, wherein said adding means adds unique information for each label sent to the customer by non-visible way.

35. A device according to claim 34, further comprising checking means for checking lapse of time from sending the label data to the customer by using the unique information.

36. A device according to claim 34, further comprising checking means for checking whether the label has been used or not by using the unique information.

37. A device according to claim 34, wherein the label information further includes item information identifying the item to be returned, and further comprising checking means for checking whether combination of the unique information and the item information is proper or not.

38. A device according to claim 33, further comprising means for receiving information representing a printed label to be used by the customer, and checking means for checking whether the received information is proper or not.

39. A device according to claim 38, further comprising means for sending a message to warn the customer so that the label data is improper in response to the output of said checking means.

40. A device for handling data to be used for returning items, the device being connected to a network to which a device of manufacturer is connected, the device of manufacturer sending label data representing a label to be printed and to be used for returning items from a customer with unique information for each label to the network, the device comprising;
scanning means for scanning a printed label to obtain image data corresponding thereto;
sending means for sending the image data to the device of manufacturer so that the image data is to be checked; and
receiving means for receiving the result of checking whether the unique information contained in the image data of the printed label is proper or not from the device of manufacturer.

41. A device for handling data to be used for returning items, the device being connected to a network to which a device of manufacturer is connected, the device of manufacturer sending label data representing a label to be printed and to be used for returning items from a customer with unique information for each label to the network, the device comprising;
reading means for reading a printed label to obtain the unique information corresponding thereto;
sending means for sending the unique information to the device of manufacturer so that the unique information is to be checked; and
receiving means for receiving the result of checking whether the unique information of the printed label is proper or not from the device of manufacturer.
